# EUROPEAN PATENT SPECIFICATION

(11) **EP 4 136 519 B1**
(45) Date of publication and mention of the grant of the patent: **15.05.2024**
(21) Application number: 21719294.7
(22) Date of filing: 13.04.2021
(51) Int. Cl.: G05D 1/02, B60W 30/165, B60W 50/14, G08G 1/00

(54) **METHOD OF CONTROLLING A PLATOON COMBINATION BY EXCHANGING BRAKE PERFORMANCE ESTIMATION VALUES**
VERFAHREN ZUR STEUERUNG EINER KOLONNENKOMBINATION DURCH AUSTAUSCH VON BREMSLEISTUNGSSCHÄTZWERTEN
PROCÉDÉ DE COMMANDE D'UNE COMBINAISON DE PELOTON PAR ÉCHANGE DE VALEURS D'ESTIMATION DE PERFORMANCE DE FREINAGE

(30) Priority: 14.04.2020 NL 2025341
(43) Date of publication of application: 22.02.2023
(73) Proprietor: DAF Trucks N.V., 5643 TW Eindhoven (NL)
(72) Inventor: HUISMAN, Rudolf Geert Maria, 5643 TW Eindhoven (NL); HENDRIKS, Ferdinand Bernardus Johannus Wilhelmus Maria, 5643 TW Eindhoven (NL); VAN DER VELDEN, Ruud Johannes Wilhelmus Maria, 5643 TW Eindhoven (NL)
(74) Representative: V.O.
(86) International application number: PCT/NL2021/050241
(87) International publication number: WO 2021/210978

(56) References cited:
- WO-A1-2019/122695
- US-A1- 2017 344 023
- US-A1- 2018 188 745
- US-A1- 2019 196 501
- US-A1- 2020 010 062

## Description

### Field of invention

The present invention relates generally to vehicle platooning. More particularly, the present invention relates to systems and methods for dynamically adjusting platoon control variables such as respective following distances for a number of vehicles such as tractor trailers.

### Description of the prior art

The benefits of driver assistive vehicle platooning are well-established, as are the benefits of a reduced following distance between respective vehicles in a platoon orientation. For example, minimizing following distances can result in reduced aerodynamic drag for all vehicles in a platoon, and thereby improve respective fuel economies. At highway speeds, aerodynamic drag may be characterized as the greatest consumer of vehicle power, well in excess of the combined effects of rolling friction resistance and vehicle accessory losses. Test results have indicated that vehicles consistently achieve increased benefits correlating to closer following distances, although the energy-saving benefits may vary depending on the respective vehicle position within a platoon.
For safe operation of platoon driving advanced braking control systems are to be implemented, along with advanced vehicle-to-vehicle communications, for the purpose of facilitating vehicle platooning and at the same time reducing the associated following distances to a maximal extent. For platoon driving, inter vehicle communication is established, that exchanges control variables necessary for the calculus of platoon following distances. These distances are determined, amongst others, by delay times in the vehicle communication; road conditions, and truck load, tire and brake system conditions. However, conventional techniques are unable to safely reduce the following distances between vehicles to a desired level. A trailing vehicle in a platoon must implement a following distance which accounts for the successive detection of braking actions by a preceding vehicle, and the accompanying reactions by intervening vehicles.
The conventional techniques, however have failed to provide a reliable identification of control variables that are to be taken into account and are often needlessly complex. In particular, it is very difficult to provide a robust estimation of the maximum brake power of a truck, and how external conditions may influence it.

One example of a vehicle monitoring and a control system for controlling acceleration and braking of a set of vehicles is disclosed in US2017344023.

### Summary of the invention

The invention is set forth in the independent claim 1 and in the dependent claims 2 to 17.

In one aspect, it is aimed to provide a method of controlling a platoon combination of a leading vehicle immediately preceding a following vehicle, comprising equipping said leading and following vehicles with a vehicle longitudinal motion control system and a vehicle-to-vehicle communication system, wherein the vehicle longitudinal motion control system of each vehicle comprises a processor configured to execute a computer program product and thereby direct the performance of operations comprising: deriving for each vehicle a current gross combination weight value; relating the current gross combination weight of said each vehicle to a maximum brake performance value and to a minimum brake performance value derived from a lookup table; said vehicle-to-vehicle communication system communicating the maximum brake performance value of the leading vehicle from the leading vehicle to the following vehicle; wherein the vehicle longitudinal motion control system is further configured to calculate a safe following distance and/or time headway of the following vehicle with respect to the leading vehicle in the platoon, using the maximum brake performance value communicated by the vehicle-to-vehicle system of the leading vehicle; and the minimum brake performance value of the following vehicle; wherein the minimum brake performance value of the following vehicle is maximized at the maximum brake performance value of the leading vehicle.

Accordingly, platoon control can be executed by a vehicle longitudinal motion control system, wherein a safe time headway for platooning is calculated simply based on minimum and maximum brake performance values of the leading and following vehicle simplifying control of the vehicle longitudinal motion control, while providing a safe time headway and corresponding minimal following distance.

### BRIEF DESCRIPTION OF THE DRAWINGS

The invention will be further elucidated in the figures:
Figure 1 shows a schematic layout of a platoon formed by a leading and following vehicle;
Figure 2 shows an exemplary layout for a vehicle brake control system and intercommunication system;
Figure 3 shows exemplary values in a lookup table relating a current gross combination weight of a vehicle to a maximum brake value ("upper") and to a minimum brake value ("lower") of the vehicle.

### DETAILED DESCRIPTION

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features.

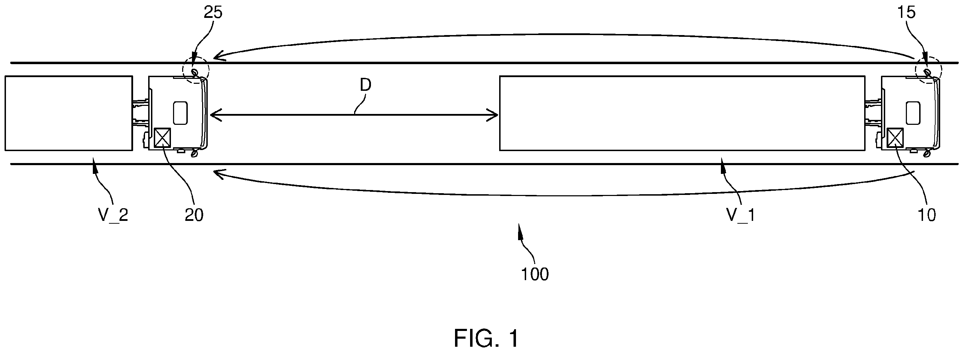

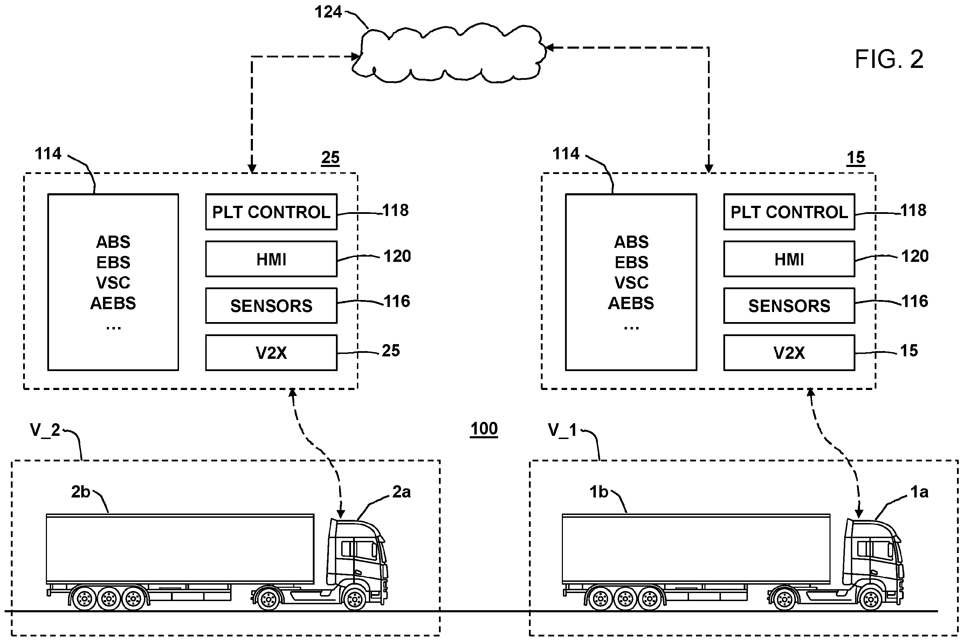

Turning to Figure 1, there is disclosed a vehicle platooning control system 100 including a leading vehicle V_1 and following vehicle V_2 in a platoon combination. The leading vehicle V_1 and following vehicle V_2 are each equipped with a vehicle longitudinal motion control system schematically indicated at 10, 20 respectively and a vehicle-to-vehicle communication system schematically indicated at 15, 25 respectively; further exemplified in Figure 2. The vehicle longitudinal motion control system 20 is configured to calculate a following distance D and/or time headway of the following vehicle V_2 with respect to the leading vehicle V_1 in the platoon. Amongst others the vehicle-to-vehicle communication system is configured to communicate a maximum brake value of the leading vehicle from the leading vehicle V_1, via it's vehicle-to-vehicle communication system 15, to vehicle-to-vehicle communication system 25 of the following vehicle V_2. The vehicle-to-vehicle communication system can be any suitable system, typically communicating via radio signals or any other suitable form, in particular WiFi and may be provided with redundant communication facilities.

Figure 2 shows vehicle platooning control system 100 as disclosed herein may be provided with respect to at least a first vehicle V_1 (truck 1a and trailer 1b) and a second vehicle V_2 (truck 2a; trailer 2b). In certain embodiments, the vehicle platooning control aspects may be implemented solely via components residing upon the vehicles V_1 V_2 themselves. In other embodiments, the vehicles may each be configured to communicate not only directly with each other but further via a communications network 124 e.g. with a remote computing network including for example one or more servers configured to implement platooning control aspects.

Each vehicle in a potential platoon may be considered to have at least certain minimum structural components in order for various embodiments of the present disclosure to be implemented. As shown in the example embodiment of FIG. 2, the vehicles may include one or more vehicle longitudinal motion control systems 10, 20, condition sensors 116, local platooning control circuitry/processor 118 functionally linked to the braking control systems 114, and a user interface 120 which typically includes graphical display components but may also include any other user input/output elements as may be necessary or desirable for conveying information to and from the driver of the respective vehicle.

In the particular embodiment as shown in FIG. 1 and FIG. 2, the vehicle longitudinal motion control and platoon implementation systems 10, 20 as necessary to provide the recited functions herein may be selected from various systems as are known to those of skill in the art including but not limited to an Anti-Lock Braking System ("ABS") for the vehicle, and to the extent that the vehicle includes a tractor and a trailer further an ABS for the respective trailer 1b/2b, Vehicle Stability Control ("VSC"), Advanced Emergency Braking Systems AEBS, Vehicle-to-Vehicle/Infrastructure Communications ("V2X") 15, 25, Electronic Braking System ("EBS"), and the like. A trailer ABS may generally be considered to be configured for communication of ABS events with at least the respective tractor.

In certain embodiments, otherwise conventional braking control systems 114, such as the AEBS for example, may be supplemented or otherwise configured to include hardware, software, or some combination thereof so as to execute a vehicle platooning algorithm in accordance with the present disclosure. Alternatively, vehicle platooning algorithms and components may be separately associated with control block 118. In various embodiments, the braking control systems, and more particularly the AEBS, may be implemented for distance measurement using techniques as are known to those of skill in the art.

The vehicle sensors 116 may be configured to provide at least certain information as needed to execute functions for a particular embodiment of the platooning control system, including for example a following distance between a given pair of vehicles, relative velocity and acceleration/deceleration values for the respective vehicle, a pressure value with respect to a braking actuator for the respective vehicle, front and rear radar/camera/LIDAR/sensors for distance measurement, image capturing and the like, side lane monitoring devices, alternative pressure sensors integrally mounted to or associated with solenoid valves, etc.

Specifically platooning control block 118 may comprise a processor configured to execute a computer program product and thereby direct the performance of operations comprising: deriving for the respective vehicle a current gross combination weight value; relating the current gross combination weight of the respective vehicle to a maximum brake value and to a minimum brake value derived from a lookup table. Such values of a current gross combination weight value can be derived from sensors 116 by means known in the art, e.g. wherein the gross combination weight value of each leading and following vehicle is derived from an electronic brake system or transmission system of the said each leading and following vehicle.

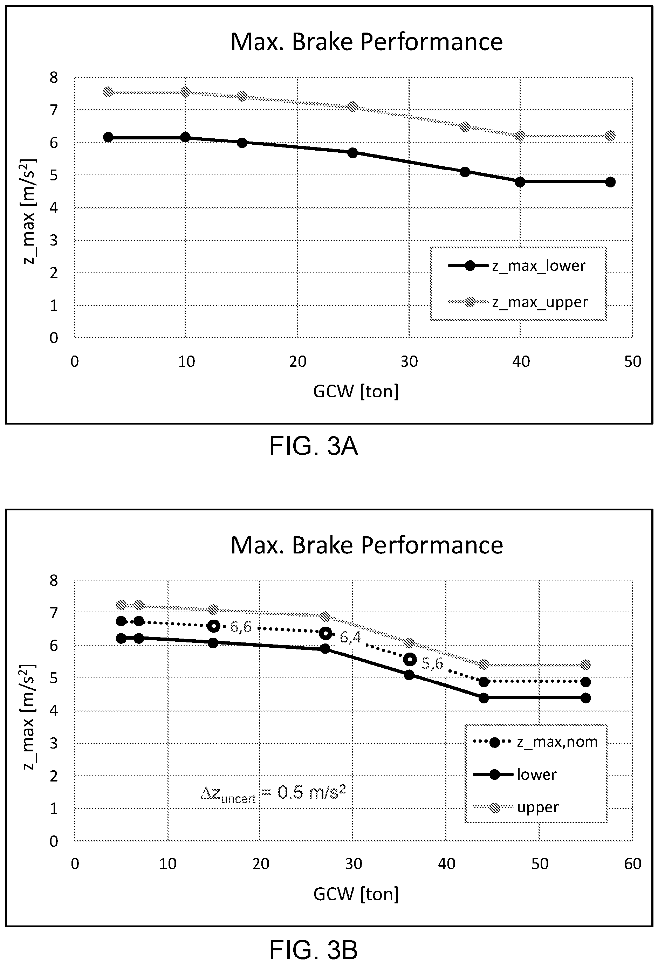

Figure 3 shows exemplary values of such a lookup table relating a current gross combination weight (GCW) of a vehicle to an estimated maximum brake value and to an estimated minimum brake value of the vehicle wherein the lookup table relates a gross combination weight of a vehicle to a maximum brake performance value that estimates a maximum deceleration value of the performance truck for said gross combination weight value and a minimum brake value that estimates a minimum deceleration value of the truck for said gross combination weight value.

The brake performance estimation can be used, for instance, to calculate a safe time headway for platooning. The brake performance estimator parameters (i.e. nominal maximum brake performance and uncertainty bands) can be determined via maximum brake performance measurements with target vehicles. Additionally a safe time headway for platooning can be calculated based on the brake performance parameters applied to the host and preceding vehicle, and an additional assumption on the (communication) time delay between the start of a braking action of the preceding vehicle and that braking action arriving via V2X at the host vehicle. This schema has the advantage that the influence of all other maximum brake performance determining factors, such as the brake supply pressure, brake temperature, load distribution, tires etc. are implicitly accounted for in this method.

It is shown in the example 3B that maximum and minimum brake values are kept constant for gross combination weight values below a mimimum gross combination value., e.g. below a minimum value of 7 tonnes, which is typically the weight of an empty truck, but this could be a different value, e.g. a range in the 5-9 tonnes and above (see example 3A).

For values in a mid range, brake performance estimation parameters are derived from practical test, and it appears that there is an approximately linear relationship between deceleration and mass, as is known from the second law of motion. The tests are performed for a number of GCW values, in particular a full value: wherein the GCW is about 38-42 tonnes, a half empty value, where the GCW is about 25-30 tonnes, and an empty value, having a GCW of about 12-15 tonnes.

Also for values above a maximum value, maximum and minimum brake performance values are kept constant for gross combination weight values exceeding a maximum gross combination weight value of the vehicle. e.g. for a maximum gross combination weight value determined by legislation, typically between 40 and 50 ton.

In Figure 3B it is shown that brake performance estimation is taken into account in uncertainty bands (± Δz_{uncert}) and is not separately estimated and calculated. The relation between GCW and z_{max,nom}, and Δz_{uncert} can be determined via max. brake deceleration measurements with target trucks or truck-trailer combinations via maximum brake performance measurements. wherein said maximum and minimum brake performance values of said lookup table are derived from practice tests with target vehicles tested in a variety of test conditions for at least three load conditions of each leading and following vehicle.

In an example, tests are performed with different tractors, different brake supply pressures (e.g. ranging between 8.5 -12.5 bar), brake temperatures (e.g. cold brakes and brakes about 100/200 °C), tires (e.g. lower and higher pressures), load distributions and conditions (empty, half full, full), and weather conditions (wet/dry). It is found that these varied conditions all fit in a bandwidth between a minimum and maximum deceleration value. Thus the test conditions that are included vary brake temperature conditions; brake pressure supply conditions; tire pressure conditions and varied load distribution conditions. Here it is assumed that the load is distributed within legal requirements. This results in an uncertainty band wherein a difference between a maximum and minimum brake performance typically ranges between 0, 5 and 3, more specifically between 0.8 and 2.0, more specifically about 1.5 m/s2.

Additionally, the safe following distance and/or time headway are augmented to correct for a delay in the vehicle-to-vehicle communication; and an offset defining a minimum following distance at standstill. A delay could range between 0.05 and 0.2 seconds. While the headway can be almost fully attributed for a brake headway, where a standstill would leave no headway, it is desirable that the driver still has some headway on standstill, for instance, about 1 to 7 meters.

The safe following distance influences the maximum and minimum brake performance parameters with a sensitivity as follows: safe headway distance scales with maximum brake performance. In addition, if it is assumed that the communications operate with a certain intrinsic delay, this correspondingly influences the safe time headway.

Once the maximum brake performance values are determined based on the GCW estimation using an estimation as exemplified here above, the maximum brake performance values are communicated by the vehicle-to-vehicle communication systems 15, 25 so that the maximum brake performance value of the leading vehicle is communicated from the leading vehicle to the following vehicle, that is input in the vehicle longitudinal motion control system 20. The vehicle longitudinal motion control system 20 is configured to
∘ calculate a safe following distance and/or time headway of the following vehicle with respect to the leading vehicle in the platoon, using the maximum brake performance value communicated by the vehicle-to-vehicle system of the leading vehicle; and the minimum brake performance value of the following vehicle;
∘ wherein the minimum brake value of the following vehicle is maximized at the maximum brake value of the leading vehicle.

Here it is assumed that the 1^{st} vehicle is maximally braking according its "upper" band (i.e. Z_{max,nom} + Δz_{uncert}), and that the 2^{nd} vehicle is braking (can brake) according to its "lower" band (i.e. Z_{max,nom} - Δz_{uncert}). The effect of different road surface conditions (e.g. dry or wet) is then incorporated by assuming that the 2^{nd} vehicle cannot brake harder than 1^{st} vehicle.

This can be illustrated as follows (using values shown in FIG. 3B):

| | |
|---|---|
| 1^{st} vehicle - 2^{nd} vehicle | Max. brake perf. [m/s²] |

### - Example 1: First vehicle: empty - second vehicle: full

| | |
|---|---|
| • 1^{st} veh. (15 ton): 6.6 ± 0.5 | 7.1 |
| • 2^{nd} veh. (36 ton): 5.6 ± 0.5 | 5.1 |

### - Example 2: First vehicle full - second vehicle empty

| | |
|---|---|
| • 1^{st} veh. (45 ton): 4.8 ± 0.5 | 5.3 |
| • 2^{nd} veh. (15 ton): 6.6 ± 0.5 | 6.1 -> 5.3* |

In example 2 the brake performance of the empty second vehicle is limited to the maximum brake performance of the first vehicle: thus the value of 6.1 is reset to the value 5.3 corresponding to the fully loaded first vehicle (see *). A safe time headway for platooning can be calculated based on the estimated brake performances applied to the host and preceding vehicle, and an additional assumption on the communications time delay in the communication between the preceding vehicle and host vehicle. Such vehicle to vehicle communication can be a WiFi or otherwise suitable connection, e.g. GSM connection e.g. possibly via the Internet.

The following exemplary example is shown to illustrate a calculation.

In the example a first vehicle mass is estimated to be 20 tonnes; the second estimated to be 40 tonnes. From a lookup table of the type e.g. as shown in Figure 3B, it is extracted that the nominal deceleration performance of the first vehicle is 6.5 m/s²; whereas the nominal deceleration of the second may be 5.2 m/s². The uncertainty band may be 1.0, i.e Δz_{uncert} will be 0.5.

The brake performance of the first vehicle may then be estimated at Z_{max,nom} + Δz_{uncert} = a1_nom + uncertainty i.e. 6.5 + 0.5 = 7.0 m/s². Similarly, the brake performance of the second vehicle is estimated at 5.2 - - 0.5 = 4.7 m/s². In addition, a communications delay is typically estimated to be 0.15 seconds, and an additional free distance at standstill is put at 5 meters, being a typical value between 1 and 7 meters.

At a vehicle speed v0 and deceleration a, the stopping distance of the first vehicle is then calculated at 0.5*v0²/a which equals 43.55 m for a speed of 89 km/h. Similarly, the stopping distance of the second vehicle is calculated at 68.12 m, including a 0.15 sec communications delay.

Thus, a safe distance amounts to the difference of the stopping distances: this is 24.57. This value can be augmented by the additional safe distance; e.g. 5 meters, leading to a total safe distance of 29.57 meters.

In summary, based on a maximum deceleration value of the first vehicle a first stopping distance is calculated; based on a minimum deceleration value of the second vehicle a second stopping distance is calculated; a safe distance is calculated as the difference between first and second distances, increased by a communications time delay, and a desired vehicle distance at standstill.

The term "module" as in "storage module" or "receiver module" or "control module" is used to emphasize the modular character of these units, i.e. the functionality of the system may be separated into independent, interchangeable units. The term "user interface" may comprise one or more hardware elements configured to perform operational acts in accordance with the present systems and methods, such as to provide control signals to the various other module components. The processor may be a dedicated processor for performing in accordance with the present system or may be a general-purpose processor wherein only one of many functions operate for performing in accordance with the present system. The processor may operate utilizing a program portion, multiple program segments, or may be a hardware device utilizing a dedicated or multi-purpose integrated circuit. Any type of processor may be used such as a dedicated or shared one. The processor may include micro-controllers, central processing units (CPUs), digital signal processors (DSPs), ASICs, or any other processor(s) or controller(s) such as digital optical devices, or analog electrical circuits that perform the same functions, and employ electronic techniques and architecture. The controller or processor may further comprise a memory that may be part of or operationally coupled to the controller. The memory may be any suitable type of memory where data is stored. Any medium known or developed that can store and/or transmit information suitable for use with the present systems and methods may be used as a memory. The memory may also store user preferences and/or application data accessible by the controller for configuring it to perform operational acts in accordance with the present systems and methods.

While example embodiments are shown for systems and methods, also alternative ways may be envisaged by those skilled in the art having the benefit of the present disclosure for achieving a similar function and result. E.g. some components may be combined or split up into one or more alternative components. Finally, these embodiments are intended to be merely illustrative of the present system and should not be construed as limiting the appended claims to any particular embodiment or group of embodiments.

## Claims

1. Method of controlling a platoon combination of a leading vehicle immediately preceding a following vehicle, comprising
- equipping said leading and following vehicles with a vehicle longitudinal motion control system and a vehicle-to-vehicle communication system,
- wherein the vehicle longitudinal motion control system of each vehicle comprises a processor configured to execute a computer program product and thereby direct the performance of operations comprising:
∘ deriving for each vehicle a current gross combination weight value;
∘ relating the current gross combination weight of said each vehicle to a maximum brake performance value and to a minimum brake performance value derived from a lookup table;
- said vehicle-to-vehicle communication system communicating the maximum brake performance value of the leading vehicle from the leading vehicle to the following vehicle;
- wherein the vehicle longitudinal motion control system is further configured to
∘ calculate a safe following distance and/or time headway of the following vehicle with respect to the leading vehicle in the platoon, using the maximum brake performance value communicated by the vehicle-to-vehicle system of the leading vehicle; and the minimum brake performance value of the following vehicle;
∘ wherein the minimum brake performance value of the following vehicle is maximized at the maximum brake performance value of the leading vehicle.

2. The method according to claim 1, wherein the gross combination weight value of each leading and following vehicle is derived from an electronic brake system, transmission system or other platooning control system of the said each leading and following vehicle.

3. The method according to claim 1 or 2, wherein the lookup table relates a gross combination weight of a vehicle to a maximum brake performance value that estimates a maximum deceleration value of the performance truck for said gross combination weight value and a minimum brake value that estimates a minimum deceleration value of the truck for said gross combination weight value.

4. The method according to claim 3, wherein said maximum and minimum brake performance values of said lookup table are derived from practice tests with target vehicles tested in a variety of test conditions for at least three load conditions of each leading and following vehicle.

5. The method according to claim 4, wherein the test conditions include varied road conditions.

6. The method according to claim 4 - 5, wherein the test conditions included varied brake temperature conditions.

7. The method according to claim 4 - 6, wherein the test conditions included varied brake pressure supply conditions.

8. The method according to claim 4 - 7, wherein the test conditions include varied tire pressure conditions.

9. The method according to claim 4 - 8, wherein the test conditions included varied load distribution conditions.

10. The method according to any preceding claim, wherein a difference between a maximum and minimum brake performance typically ranges between 0.5 and 3.0 m/s².

11. The method according to any preceding claim, wherein maximum and minimum brake performance values are kept constant for gross combination weight values exceeding a maximum gross combination weight value of the vehicle.

12. The method according to claim 11, wherein the maximum gross combination weight value ranges between 40 and 50 ton.

13. The method according to any preceding claim, wherein maximum and minimum brake values are kept constant for gross combination weight values below a mimimum gross combination value.

14. The method according to claim 13, wherein the mimimum gross combination value ranges between 5 and 10 ton.

15. The method according to any preceding claim, wherein the safe time headway is augmented to correct for a delay in the vehicle-to-vehicle communication.

16. The method according to claim 15, wherein the augmentation ranges between 0.05 and 0.2 sec.

17. The method according to any preceding claim, wherein the safe following distance is augmented to correct for and an offset defining a minimum following distance at standstill.

## Patentansprüche

1. Verfahren zum Steuern einer Kolonnenkombination eines führenden Fahrzeugs, das sich direkt vor einem folgenden Fahrzeug befindet, das Folgendes umfasst
- Ausrüsten des führenden und des folgenden Fahrzeugs mit einem Fahrzeuglängsbewegungssteuersystem und einem Fahrzeug-zu-Fahrzeug-Kommunikationssystem,
- wobei das Fahrzeuglängsbewegungssteuersystem jedes Fahrzeugs einen Prozessor umfasst, der dazu ausgelegt ist, ein Computerprogrammprodukt auszuführen und dadurch die Durchführung von Operationen zu lenken, die Folgendes umfassen:
o Ableiten eines aktuellen Kombinationsbruttogewichtswertes für jedes Fahrzeug;
o Inbeziehungsetzen des aktuellen Kombinationsbruttogewichts jedes Fahrzeugs zu einem maximalen Bremsleistungswert und zu einem minimalen Bremsleistungswert, die aus einer Nachschlagetabelle abgeleitet werden;
- wobei das Fahrzeug-zu-Fahrzeug-Kommunikationssystem den maximalen Bremsleistungswert des führenden Fahrzeugs vom führenden Fahrzeug zum folgenden Fahrzeug kommuniziert;
- wobei das Fahrzeuglängsbewegungssteuersystem ferner zu Folgendem ausgelegt ist
o Berechnen eines sicheren Folgeabstands und/oder eines Zeitabstands des folgenden Fahrzeugs mit Bezug auf das führende Fahrzeug in der Kolonne unter Verwendung des maximalen Bremsleistungswertes, der vom Fahrzeug-zu-Fahrzeug-System des führenden Fahrzeugs kommuniziert wird, und des minimalen Bremsleistungswertes des folgenden Fahrzeugs;
o wobei der minimale Bremsleistungswert des folgenden Fahrzeugs beim maximalen Bremsleistungswert des führenden Fahrzeugs maximiert wird.

2. Verfahren nach Anspruch 1, wobei der Kombinationsbruttogewichtswert jedes führenden und folgenden Fahrzeugs aus einem elektronischen Bremssystem, Transmissionssystem oder einem anderen Kolonnensteuersystem jedes führenden und folgenden Fahrzeugs abgeleitet wird.

3. Verfahren nach Anspruch 1 oder 2, wobei die Nachschlagetabelle ein Kombinationsbruttogewicht eines Fahrzeugs zu einem maximalen Bremsleistungswert, der einen maximalen Verzögerungswert des Leistungs-Lkws für den Kombinationsbruttogewichtswert schätzt, und einem minimalen Bremswert, der einen minimalen Verzögerungswert des Lkws für den Kombinationsbruttogewichtswert schätzt, in Beziehung setzt.

4. Verfahren nach Anspruch 3, wobei der maximale und der minimale Bremsleistungswert der Nachschlagetabelle aus Praxistests mit Zielfahrzeugen abgeleitet werden, die unter einer Vielfalt von Testbedingungen für mindestens drei Lastbedingungen jedes führenden und folgenden Fahrzeugs getestet werden.

5. Verfahren nach Anspruch 4, wobei die Testbedingungen verschiedene Straßenbedingungen beinhalten.

6. Verfahren nach Anspruch 4 bis 5, wobei die Testbedingungen verschiedene Bremstemperaturbedingungen beinhalten.

7. Verfahren nach Anspruch 4 bis 6, wobei die Testbedingungen verschiedene Bremsdruckversorgungsbedingungen beinhalten.

8. Verfahren nach Anspruch 4 bis 7, wobei die Testbedingungen verschiedene Reifendruckbedingungen beinhalten.

9. Verfahren nach Anspruch 4 bis 8, wobei die Testbedingungen verschiedene Lastverteilungsbedingungen beinhalten.

10. Verfahren nach einem der vorhergehenden Ansprüche, wobei eine Differenz zwischen einer maximalen und einer minimalen Bremsleistung typischerweise zwischen 0,5 und 3,0 m/s² liegt.

11. Verfahren nach einem der vorhergehenden Ansprüche, wobei ein maximaler und ein minimaler Bremsleistungswert für Kombinationsbruttogewichtswerte, die einen maximalen Kombinationsbruttogewichtswert des Fahrzeugs überschreiten, konstant gehalten werden.

12. Verfahren nach Anspruch 11, wobei der maximale Kombinationsbruttogewichtswert zwischen 40 und 50 Tonnen liegt.

13. Verfahren nach einem der vorhergehenden Ansprüche, wobei ein maximaler und ein minimaler Bremswert für Kombinationsbruttogewichtswerte unter einem minimalen Kombinationsbruttowert konstant gehalten werden.

14. Verfahren nach Anspruch 13, wobei der minimale Kombinationsbruttowert zwischen 5 und 10 Tonnen liegt.

15. Verfahren nach einem der vorhergehenden Ansprüche, wobei der sichere Zeitabstand vergrößert wird, um eine Verzögerung bei der Fahrzeug-zu-Fahrzeug-Kommunikation zu korrigieren.

16. Verfahren nach Anspruch 15, wobei die Vergrößerung zwischen 0,05 und 0,2 Sekunden liegt.

17. Verfahren nach einem der vorhergehenden Ansprüche, wobei der sichere Folgeabstand vergrößert wird, um einen Versatz zu korrigieren, der einen minimalen Folgeabstand im Stillstand definiert.

## Revendications

1. Procédé de contrôle d'une combinaison de peloton d'un véhicule de tête précédant immédiatement un véhicule suiveur, comprenant
- l'équipement desdits véhicules de tête et suiveur avec un système de contrôle du mouvement longitudinal du véhicule et d'un système de communication de véhicule à véhicule,
- dans lequel le système de contrôle du mouvement longitudinal de chaque véhicule comprend un processeur configuré pour exécuter un produit de programme informatique et diriger ainsi l'exécution d'opérations comprenant :
o l'établissement pour chaque véhicule d'une valeur actuelle du poids brut de l'ensemble ;
o la mise en relation du poids total en charge actuel de chaque véhicule avec une valeur d'efficacité de freinage maximale et une valeur d'efficacité de freinage minimale dérivée d'une table de recherche ;
- ledit système de communication de véhicule à véhicule communique la valeur maximale d'efficacité des freins du véhicule de tête au véhicule suiveur ;
- dans lequel le système de contrôle du mouvement longitudinal du véhicule est en outre configuré pour
o calculer une distance de sécurité et/ou un temps d'avance du véhicule suiveur par rapport au véhicule de tête du peloton, en utilisant la valeur maximale d'efficacité du freinage communiquée par le système de véhicule à véhicule du véhicule de tête ; et la valeur minimale d'efficacité du freinage du véhicule suiveur ;
o dans lequel la valeur minimale d'efficacité du freinage du véhicule suiveur est maximisée à la valeur maximale d'efficacité du freinage du véhicule de tête.

2. Procédé selon la revendication 1, dans lequel la valeur du poids brut combiné de chaque véhicule de tête et de chaque véhicule suiveur est dérivée d'un système de freinage électronique, d'un système de transmission ou d'un autre système de contrôle du peloton dudit véhicule de tête et dudit véhicule suiveur.

3. Procédé selon la revendication 1 ou 2, dans lequel la table de recherche associe un poids combiné brut d'un véhicule à une valeur de freinage maximale qui estime une valeur de décélération maximale du camion pour ladite valeur de poids combiné brut et à une valeur de freinage minimale qui estime une valeur de décélération minimale du camion pour ladite valeur de poids combiné brut.

4. Procédé selon la revendication 3, dans lequel les valeurs maximales et minimales d'efficacité de freinage de la table de recherche sont dérivées d'essais pratiques avec des véhicules cibles testés dans une variété de conditions d'essai pour au moins trois conditions de charge de chaque véhicule de tête et de chaque véhicule suiveur.

5. Procédé selon la revendication 4, dans lequel les conditions d'essai incluent des conditions différentes de la route.

6. Procédé selon la revendication 4 à 5, dans lequel les conditions d'essai incluent des conditions de température de freinage différentes.

7. Procédé selon la revendication 4 à 6, dans lequel les conditions d'essai incluent des conditions de pression de freinage différentes.

8. Procédé selon la revendication 4 à 7, dans lequel les conditions d'essai incluent des conditions de pression des pneus différentes.

9. Procédé selon la revendication 4 à 8, dans lequel les conditions d'essai incluent des conditions de répartition de charge différentes.

10. Procédé selon l'une quelconque des revendications précédentes, dans lequel la différence entre les performances maximales et minimales de freinage est généralement comprise entre 0,5 et 3,0 m/s².

11. Procédé selon l'une quelconque des revendications précédentes, dans lequel les valeurs maximales et minimales d'efficacité des freins sont maintenues constantes pour des valeurs de poids total combiné dépassant une valeur maximale de poids total combiné du véhicule.

12. Procédé selon la revendication 11, dans lequel la valeur maximale du poids brut combiné est comprise entre 40 et 50 tonnes.

13. Procédé selon l'une quelconque des revendications précédentes, dans lequel les valeurs de freinage maximales et minimales sont maintenues constantes pour les valeurs de poids brut combiné inférieures à une valeur minimale combinée brute.

14. Procédé selon la revendication 13, dans lequel la valeur minimale brute combinée est comprise entre 5 et 10 tonnes.

15. Procédé selon l'une quelconque des revendications précédentes, dans lequel le temps d'avance de sécurité est augmenté pour corriger un retard dans la communication véhicule-véhicule.

16. Procédé selon la revendication 15, dans lequel l'augmentation est comprise entre 0,05 et 0,2 sec.

17. Procédé selon l'une quelconque des revendications précédentes, dans lequel la distance de sécurité est augmentée pour corriger un décalage définissant une distance de sécurité minimale à l'arrêt.
